(19) Europäisches Patentamt
European Patent Office
Office européen des brevets

(11) Veröffentlichungsnummer: **0 130 420**
**A1**

(12) # EUROPÄISCHE PATENTANMELDUNG

(21) Anmeldenummer: **84106560.0**

(22) Anmeldetag: **08.06.84**

(51) Int. Cl.⁴: **F 16 H 39/50**

(30) Priorität: **24.06.83 US 507380**

(43) Veröffentlichungstag der Anmeldung: **09.01.85**
**Patentblatt 85/2**

(84) Benannte Vertragsstaaten: **DE FR GB IT**

(71) Anmelder: **DEERE & COMPANY, 1 John Deere Road, Moline Illinois 61265 (US)**

(72) Erfinder: **Vogelaar, Bernard Francis, 1710 36th Street, Moline Illinois 61265 (US)**
Erfinder: **Allen, James Robert, 1357 Pine Acre, Bettendorf Iowa 52722 (US)**
Erfinder: **Newcom, David Leon, 534 Excelsior Lane, Waterloo Iowa 50701 (US)**

(74) Vertreter: **Sartorius, Peter et al, DEERE & COMPANY European Office, Patent Department Postfach 503 Steubenstrasse 36-42, D-6800 Mannheim 1 (DE)**

(54) **Antriebsvorrichtung für die Antriebsachsen eines Fahrzeuges.**

(57) Die Antriebsvorrichtung zum Antrieb der Laufräder (14, 28) eines Mähdreschers weist eine über eine Verbrennungskraftmaschine antreibbare Pumpe (36) mit veränderbarem Fördervolumen auf, die über Drosseln (88) aufweisende Hydraulikleitungen (80, 82, 84, 86) mit einem ersten Hydromotor (50) zum Antrieb der vorderen und einem zweiten Hydromotor (70) mit veränderbarem Fördervolumen zum Antrieb der hinteren Laufräder (14, 28) verbunden ist. Das Fördervolumen des zweiten Hydromotors (70) wird über eine vom Systemdruck abhängige Steuereinrichtung (92) beeinflußt. Verändert sich z.B. der Zugleistungsbedarf des Mähdreschers, z.B. infolge der Zunahme des Sammelbehälterinhalts, so kann durch entsprechende Steuerung der Druckmittelzufuhr über die Steuereinrichtung (92) der hinteren Radachse ein höheres Antriebsmoment zur Verfügung gestellt werden als der vorderen Antriebsachse.

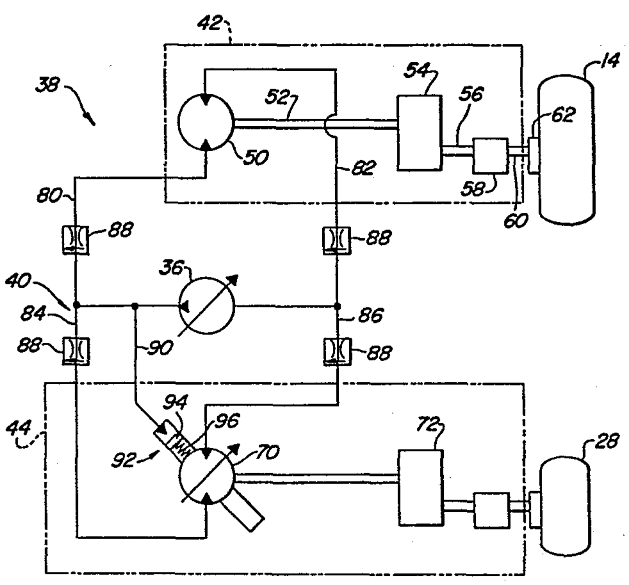

EP 0 130 420 A1

Antriebsvorrichtung für die Antriebsachsen eines Fahrzeuges

Die Erfindung bezieht sich auf eine Antriebsvorrichtung für die Antriebsachsen eines Fahrzeuges, insbesondere eines landwirtschaftlich nutzbaren Fahrzeuges, mit einer Verbrennungskraftmaschine zum Antrieb einer Pumpe mit veränderlichem Fördervolumen sowie einem ersten Hydromotor zum Antrieb der ersten Achse sowie einem zweiten Hydromotor zum Antrieb einer zweiten Achse, wobei die beiden Hydromotoren über die Pumpe mit Druckmittel verorgt werden.

Es ist eine Antriebsvorrichtung für die Antriebsachsen eines Mähdreschers bekannt (US-PS 3 736 732), die einen Haupthydromotor aufweist, der über ein Wegeventil und über Drosseln aufweisende Hydraulikleitungen mit den hinteren Laufrädern eines Mähdreschers verbunden ist. Diese Hilfsantriebsvorrichtung zum Antrieb der hinteren Laufräder muß beispielsweise bei Transportfahrten vom Hauptantrieb abgekuppelt werden, da der Drehzahlbereich der Hydromotoren nicht ausreicht, um die hinteren Laufräder ebenfalls mit hoher Geschwindigkeit anzutreiben. Auf diese Weise entfällt die vorteilhafte Wirkung, beim Bremsen des Mähdreschers die Hydromotoren als Pumpen arbeiten zu lassen und somit die Bremskraft des Mähdreschers zu verbessern. Aufgrund des unterschiedlichen Leistungsbedarfs der Vorder- und der Hinterachse des Mähdreschers, insbesondere bei Mähdreschern mit Knicklenkung, läßt sich mit der bekannten Antriebsvorrichtung der unterschiedliche Leistungsbedarf der Laufradachsen nicht ausgleichen.

Demgegenüber liegt der Erfindung die Aufgabe zugrunde, die Antriebsvorrichtung für die Laufräder eines Fahrzeuges derart auszubilden und anzuordnen, daß bei unterschiedlichem Drehmomentenbedarf an den einzelnen Laufrädern eine unterschiedliche Drehmomentenbeaufschlagung der Laufräder möglich ist. Diese Aufgabe ist dadurch gelöst worden, daß zumindest dem zweiten Hydromotor eine in Abhängigkeit von einem Ladedruck oberhalb eines einstellbaren Minimaldruckes im Hydrauliksystem der Antriebsvorrichtung stehende Steuereinrichtung wirkungsmäßig zugeordnet ist, die Einfluß auf das Fördervolumen des zweiten Hydromotors hat. Da alle vier Laufräder des Fahrzeuges über Hydromotoren angetrieben werden, ist es möglich, beispielsweise die Laufräder für die hintere Achse mit einem größeren Drehmoment anzutreiben als die Laufräder der vorderen Achse. Dies wird auf einfache Weise dadurch erreicht, daß einem Hydromotor eine Steuereinrichtung zugeordnet ist, die in Abhängigkeit von dem sich im Hydrauliksystem aufbauenden Druck an dem Hydromotor mit veränderlichem Fördervolumen beispielsweise die zugehörige Taumelscheibe so einstellt, daß beispielsweise den hinteren Laufrädern ein größeres Drehmoment zur Verfügung gestellt werden kann, wenn die Achsbelastung des Fahrzeuges zunimmt. Auf diese Weise kann bei gleichem Antriebsmoment, das über die Verbrennungskraftmaschine auf die einzelnen Hydromotoren geleitet wird, an der Vorder- bzw. an der Hinterachse ein unterschiedliches Drehmoment erzeugt werden, so daß mittels der Stelleinrichtung eine gute Anpassung der Antriebsvorrichtung auf unterschiedliche bzw. ungleichmäßige Belastungen möglich ist. Hierzu ist es vorteilhaft, daß zumindest zwischen dem einen Hydromotor und der zugehörigen anzutreibenden Welle zum Antrieb der Laufräder ein Wechselgetriebe geschaltet ist und daß der erste Hydromotor als Konstantmotor ausgebildet ist. Da der Haupthydromotor als Stellmotor und der Hydromotor zum Antrieb der hinteren Laufräder als Regelmotor ausgebildet ist, erhält man eine sehr kostengünstige Antriebsvorrichtung, mit der die unterschiedlichen Belastungen an der Vorder- und an der Hinterachse des Fahrzeuges ohne weiteres ausgeglichen werden können. Die Steuereinrichtung für den einen Hydromotor mit veränderlichem Fördervolumen ist dabei so ausgebildet, daß sie bei einem bestimmten Druck, der beispielsweise über einem festzulegenden Arbeitsdruck liegt, anspricht und dadurch das Fördervolumen des zweiten Hydromotors entsprechend verändert. Durch die Verwendung eines Wechselgetriebes, das zwischen dem entsprechenden Hydromotor und dem anzutreibenden Laufrad vorgesehen ist, erhält man insgesamt einen Antrieb mit annähernd stufenloser Drehzahleinstellung, da der Hydromotor mit seinem veränderlichen Fördervolumen und somit veränderlichen Drehzahlumfang den Drehzahlbereich eines Ganges des Wechselgetriebes entsprechend überlappt.

Eine gute Anpassung der Antriebsvorrichtung auf die unterschiedlichen Arbeitsbedingungen des Fahrzeuges erhält man dadurch, daß die Veränderung des Fördervolumens des zweiten Hydromotors mittels der automatischen Steuereinrichtung proportional dem Wechsel des Ladedruckes bzw. des Druckes im Hydrauliksystem entspricht. Vorteilhaft ist es ferner, daß in die Antriebsverbindung zwischen einem jeden Hydromotor und der zugehörigen Welle ein Wechselgetriebe mit mindestens zwei Gängen integriert ist.

In weiterer Ausgestaltung der Erfindung ist es vorteilhaft, daß zwischen der Pumpe und den nachgeschalteten Hydromotoren Drosseln in den die Hydromotoren miteinander verbindenden Hydraulikleitungen geschaltet sind und daß die Hydromotoren in einem geschlossenen Hydraulikkreislauf parallel geschaltet sind. Vorteilhaft ist es ferner, daß die Steuereinrichtung aus mindestens einem in einem Zylinder angeordneten, gegen die Wirkung einer Druckfeder verstellbaren Kolben gebildet ist, der in Abhängigkeit von dem Druck des Hydrauliksystems mindestens das Fördervolumen des Hydromotors zum Antrieb der hinteren Laufräder eines Mähdreschers steuert, der als Gelenkmähdrescher mit einer hinteren einen Sammelbehälter aufweisenden Rahmeneinheit ausgerüstet ist. Diese Antriebsvorrichtung ist insbesondere für Mähdrescher vorteilhaft, die aus zwei über eine Gelenkverbindung verbundenen Rahmeneinheiten bestehen, wobei die hintere Rahmeneinheit mit einem Sammelbehälter ausgestattet ist. Bei zunehmender Füllung des Sammelbehälters des Mähdreschers wird die Achslast vergrößert und somit auch das notwendige Antriebsmoment, dessen Wert nunmehr über dem Wert des Antriebsmomentes für die vorderen Laufräder liegt. Durch den sich ändernden Druck spricht die Steuereinrichtung für den zweiten Hydromotor unmittelbar an und stellt daraufhin den Laufrädern der Hinterachse des Mähdreschers ein größeres Antriebsmoment zur Verfügung. Somit kann bei gleicher Antriebsleistung, die durch die Verbrennungskraftmaschine zur Verfügung gestellt wird, jeweils die Achse optimal so angetrieben werden, wie es aufgrund der auftretenden Belastungsschwankungen an der entsprechenden Achse notwendig ist. Durch die Verwendung der Pumpe mit veränderlichem Fördervolumen in Verbindung mit der Steuereinrichtung und dem über die Steuereinrichtung beeinflußbaren Hydromotor wird der Bedienungskomfort der Antriebsvorrichtung wesentlich verbessert, da lediglich die Pumpe über einen einzigen Hebel verstellt zu werden braucht, um für den Mähdrescher die notwendige Fahrgeschwindigkeit zu erreichen und den einzelnen Laufrädern das notwendige Antriebsmoment zur Verfügung zu stellen.

Im folgenden wird die Erfindung anhand von lediglich einen Ausführungsweg darstellenden Zeichnungen näher erläutert. Es zeigt:

Fig. 1 eine schematische Darstellung eines Mähdreschers mit gelenkig daran angeschlossenem Sammelbehälter,

Fig. 2 eine schematische Darstellung eines hydrostatischen mechanischen Antriebssystems,

Fig. 3 eine grafische Darstellung der prozentualen maximalen Verdrängung über dem Ladedruck,

Fig. 4 eine grafische Darstellung des Drehmomentes über der Fahrzeug-Geschwindigkeit,

Fig. 5 die Übersetzungsverhältnisse des Antriebssystems,

Fig. 6 den Vergleich zwischen Drehmoment und Geschwindigkeit der erfindungsgemäßen Antriebsvorrichtung mit einem entsprechenden hydrostatischen Getriebe.

In der Zeichnung ist mit 10 der vordere Teil des Mähdreschers bezeichnet, der ein Gehäuse 12 aufweist, das sich auf Laufrädern 14 abstützt. Der Mähdrescher 10 nimmt Erntegut vom Feld auf und weist hierzu eine nur teilweise dargestellte Erntebergungsvorrichtung 16 auf, über die das Erntegut einer Dresch- und Trennvorrichtung 18 zugeführt wird. Der Mähdrescher 10 wird von der Fahrerkabine 20 aus bedient.

Der hintere Teil 22 des Mähdreschers 10 ist gelenkig mit dem vorderen Teil 10 verbunden und weist hierzu einen oberen Lenker 24 und mindestens einen unteren Lenker 26 auf, wobei der hintere Teil 22 sich auf Laufrädern 28 abstützt. Der hintere Teil 22 enthält einen Sammelbehälter 30 und eine Entleerungsvorrichtung 32.

Die allgemeine Antriebsvorrichtung des Mähdreschers ist in Fig. 1 angedeutet. Sie weist eine Verbrennungskraftmaschine 34 auf, die eine Pumpe bzw. einen Haupthydromotor 36, beispielsweise mit veränderlichem Fördervolumen, antreibt, sowie einen Sammelbehälter 37. Die Pumpe 36 steht über die Hydraulikleitung 38 mit einem vorderen hydrostatischen Getriebe 42 und über eine Hydraulikleitung 40 mit einem hinteren hydrostatischen Getriebe 44 in Verbindung, die zum Antrieb der Laufräder 14 und 28 dienen.

In Fig. 2 ist die Antriebsvorrichtung schematisch dargestellt. Das vordere hydrostatische Getriebe 42 weist einen Hydromotor 50 mit unveränderlichem Fördervolumen auf, der über eine Antriebswelle 52 ein Wechselgetriebe 54 antreibt. An den Ausgang des Wechselgetriebes 54 ist eine Welle 56 angeschlossen, die über ein Differential 58 mit der Vorderachse 60 des Endantriebes 62 der Laufräder 14 in Verbindung steht. Das Wechselgetriebe 54 weist, wie aus Fig. 5 hervorgeht, drei Übersetzungsverhältnisse auf.

Die Anordnung des hinteren hydrostatischen Getriebes 44 ist ähnlich wie die Anordnung des vorderen hydrostatischen Getriebes 42. Lediglich der Hydromotor 70 mit veränderlichem Fördervolumen kann seine Drehrichtung ändern, und das Getriebe 72 weist lediglich zwei Übersetzungsverhältnisse für die Laufräder 28 auf (siehe Fig. 5).

Die in Fig. 1 dargestellten hydraulischen Leitungen 38 und 40 sind im Detail in Fig. 2 veranschaulicht, und hierzu gehören die Hydraulikleitungen 80, 82, 84 und 86, die die Pumpe 36 mit den Hydromotoren 50 und 70 verbinden. Die Hydromotoren 50 und 70 sowie die Pumpe 36 sind parallel in einem geschlossenen Kreislauf geschaltet, so daß in Abhängigkeit von der Leistungsaufnahme der Motoren diese entsprechend mit Druckmittel versorgt werden. Eine Druckbegrenzungseinrichtung bzw. eine Drossel 88 ist jeweils in den Hydraulikleitungen 80, 82, 84 und 86 vorgesehen, um eine zu hohe Geschwindigkeit der Hydromotoren auszuschalten.

Wie aus Fig. 2 hervorgeht, wird das Fördervolumen des Hydromotors 70 zum Antrieb der hinteren Laufräder 28 über eine Steuereinrichtung 92 beeinflußt, die in Abhängigkeit von dem durch eine Hydraulikleitung 90 erfaßten Druck steht. Die Steuereinrichtung 92 besteht aus einem Zylinder mit einem Kolben 94, der gegen die Wirkung einer Druckfeder 96 verstellbar ist und gegen einen Anschlag zur Anlage kommt, durch den das minimale Fördervolumen des Hydromotors 70 bestimmt wird. Die Taumelscheibe des Hydromotors und der zugehörige Mechanismus, der über die Steuereinrichtung 92 beeinflußt wird, sind in der Zeichnung nicht dargestellt. Das über die Steuereinrichtung 92 beeinflußte Fördervolumen des Hydromotors 70 ergibt sich aus dem Kurvenverlauf gemäß Fig. 3. Zwischen den Punkten A und B ist der untere Ladedruck konstant, der dann erreicht wird, wenn der Kolben 94 über die Druckfeder 96 gegen seinen Anschlag gedrückt wird. Solange der Druck sich im Hydrauliksystem nicht ändert, arbeitet der Hydromotor 70 mit dem kleinsten Fördervolumen, das in der Kurve durch den Buchstaben C angedeutet ist. Wird der Ansprechdruck (Kurvenpunkt B) überschritten, so wird der Kolben 94 gegen die Wirkung der Druckfeder 96 verstellt, so daß proportional zum Anstieg des Druckes in der Hydraulikleitung 90 das Fördervolumen verändert wird, und zwar bis zu einem maximalen Fördervolumen, das in der Kurve gemäß Fig. 3 durch den Punkt D, E wiedergegeben ist. Dieser Kurvenpunkt entspricht dem maximalen Fördervolumen bei maximalem Druck.

Die Arbeitskennlinie des hydraulischen Systems bei einem bestimmten Getriebe ist in Fig. 4 veranschaulicht. Der Kurvenverlauf MN bei maximaler Ausgangsleistung stellt sich ein bei Erreichung des oberen Ladedruckes, bei konstantem Drehmoment und bei steigender Geschwindigkeit LM oder bei Erreichung einer bestimmten konstanten Strömungsgeschwindigkeit des Druckmittels (Kurvenverlauf ON). Die Begrenzung der Strömungsgeschwindigkeit des Druckmittels ergibt sich durch die im Hydrauliksystem vorgesehenen Drosseln. Der Punkt N in Fig. 4 entspricht dem Punkt B, C in Fig. 3, und zwar dem Ansprechdruck des Hydromotors 70 für die hinteren Laufräder 28, bei dem das Fördervolumen des Hydromotors 70 sich vergrößert und die Pumpe zu arbeiten beginnt. Der ansteigende Leistungsbedarf der Antriebsvorrichtung entspricht einem ansteigenden Ladedruck, woraus sich ein Anstieg des Fördervolumens bei gleichzeitiger Verminderung der Fahrgeschwindigkeit ergibt, bis der Hydromotor 70 seine maximale Leistung erreicht hat, die in der Kurve gemäß Fig. 4 durch den Punkt M wiedergegeben ist. Weitere Kennzeichen des hydraulischen Antriebssystems ergeben sich aus Fig. 5, in der drei Übersetzungsverhältnisse für die Antriebsvorrichtung der vorderen Laufräder 14 und zwei für die Antriebsvorrichtung der hinteren Laufräder 28 wiedergegeben sind. Der Verlauf der Drehmomenten- und Geschwindigkeitscharakteristik für jede Getriebestufe ist ähnlich wie in Fig. 4, ebenso wie in Fig. 6 wiedergegeben, wobei in Fig. 6 die Ausgangsleistung der Leistung entspricht, die an den Laufrädern des Fahrzeuges bzw. des Mähdreschers gemessen wird. Das effektive Ausgangsdrehmoment ist in Fig. 6 durch das Reifen-Zugverhältnis (rim-pull ratio - dies entspricht einem Verhältnis zwischen dem Drehmoment an der Achse und dem Laufraddurchmesser des antreibbaren Laufrades) ausgedrückt. Die Spezifizierung des Antriebssystems wird mit Bezug auf die Motor- und Pumpenleistung und das Übersetzungsverhältnis des Getriebes so gewählt, daß der individuelle Umfang der Geschwindigkeit und des Drehmomentes, das von jedem Zahnrad ausgeht, zusammen den gewünschten Umfang von Drehmoment und Geschwindigkeit liefert. Die entsprechenden charakteristischen Kurvenabschnitte 101, 102, 103 und 104 der vier Gänge sind zusammen in Fig. 6 dargestellt, die unter der Annahme einer konstanten Leistung den Kurvenabschnitt JK ergeben. Die Kurve konstanter Leistung (KW) ergibt sich bei maximaler Leistung der durch die Verbrennungskraftmaschine 34 angetriebenen Pumpe 36. Geht man davon aus, daß ein stufenlos einstellbares Getriebe gewünscht wird, so entspricht der Kurvenverlauf JK einem idealen Kurvenverlauf bei idealer Leistungscharakteristik der Antriebsvorrichtung für einen Mähdrescher. Wie in Fig. 6 veranschaulicht, ergibt die sorgfältige Auswahl der einzelnen Komponenten eine Serie von Kurvencharakteristiken, die sich aus den Übersetzungsverhältnissen bzw. Abstufungen der vier einzelnen Gänge ergeben und die in etwa einem stufenlos einstellbaren Getriebe entsprechen (Kurve JK).

Die einzelnen Kurvenabschnitte für die Geschwindigkeits- und Drehmomentenanteile der entsprechenden Gänge sind durch die Kurvenpunkte M'N', M''N'' usw. wiedergegeben. Diese Kurvenabschnitte ergeben sich bei maximaler Ausgangsleistung der beiden Hydromotoren 50 und 70 und den entsprechenden Getriebeübersetzungsverhältnissen. Die einzelnen Kurvenabschnitte weisen einen stärkeren Anstieg als die ideale Kurve JK auf, die den tatsächlichen Wirkungsgrad angibt, der sich einstellt, wenn bei einem geringen Motorwirkungsgrad eine geringere Förderleistung erzielt wird. Wie aus Fig. 6 hervorgeht, ist die Antriebsvorrichtung so ausgelegt, daß ein jeder Kurvenabschnitt für einen bestimmten Gang die Idealkurve JK entsprechend schneidet. Bei einem höheren Drehmoment wird die Getriebeleistung durch die durch die Pumpe 36 aufzubringende Leistung begrenzt. Die Kurvenabschnitte P', P'' usw. geben den Bereich an, der als Leistung nicht zur Verfügung steht. Bei einer höheren Leistung verläuft die Kurve für die tatsächliche Leistung mit der Leistung der Idealkurve zusammen. Die Kurvenabschnitte Q', Q'' usw. geben den Bereich an, in dem die Ausgangsleistung unter die ideale Leistungskurve fällt, wobei die Ausgangsleistung von den einzelnen Parametern des hydraulischen Systems abhängt. Wie jedoch aus Fig. 6 hervorgeht, wird durch die optimale Bestimmung und Auslegung des hydraulischen Antriebssystems die Verlustleistung, die durch die Kurvenabschnitte Q', Q'' wiedergegeben ist, klein gehalten, so daß insgesamt die Kurve für die Ausgangsleistung im wesentlichen der Idealkurve JK für den gesamten Drehmomenten-Geschwindigkeits-Bereich folgt.

Aus Vorstehendem ergibt sich, daß die automatische Steuerung der Förderleistung in Abhängigkeit von dem Ladedruck in dem Hydrauliksystem zu sehr günstigen Ergebnissen führt, wobei bei einem derartigen System die Förderleistung normalerweise auf das niedrigste Niveau eingestellt ist. Jeweils auf die bestimmte Fahrgeschwindigkeit stellt sich automatisch das entsprechende Übersetzungsverhältnis ein. Solange das notwendige Drehmoment unter der Kapazität der hydraulischen Antriebsvorrichtung liegt, steht eine zusätzliche Antriebskraft vergleichsweise zu einem hydraulischen System mit konstantem Fördervolumen der gleichen Kapazität zur Verfügung. Die Verwendung einer nur geringen Anzahl mechanischer Übersetzungsverhältnisse ergibt bei diesem hydraulischen System eine Leistungscharakteristik über den gesamten Drehmomenten-Geschwindigkeits-Bereich, der dem Bereich einer hydraulischen Antriebsvorrichtung sehr nahekommt, deren Kapazität höher ist und die mit einem einzigen Übersetzungsverhältnis für das Getriebe ausgestattet ist.

Ein weiterer Vorteil gegenüber konventionellen Getrieben besteht in der Verbesserung der Kraftfahrzeug-Mobilität durch die Verwendung einer modifizierten automatischen Drehmomentenerhöhung in Abhängigkeit von dem Leistungsbedarf, wann immer der Ladungsdruck dicht an den Ansprechdruck herankommt bzw. diesen überschreitet, bei dem der Hydromotor mit seiner Förderung beginnt (siehe Fig. 3). Eine jede Schwankung in den Arbeitsbedingungen, die zu einem Wechsel in dem Leistungsbedarf führt, wird entsprechend erfaßt und führt beispielsweise zu einer Erhöhung des Ladedruckes an der Steuereinrichtung 92 und einer Veränderung der Förderung des Hydromotors 70 für die hinteren Laufräder 28, die entsprechend schneller oder langsamer angetrieben werden. Wird beispielsweise die Förderung der beiden Hydromotoren 50 und 70 vergrößert, so wird dadurch nicht nur ein größeres Drehmoment zum Antrieb des Mähdreschers zur Verfügung gestellt, sondern es wird auch eine entsprechende Druckmittelversorgung des hinteren Motors für die hintere Achse gewährleistet (ungeachtet einer geringen Geschwindigkeitsabnahme bei Vorwärtsfahrt). Dieser Effekt tritt auch bei maximaler Leistung und bei automatischer Rückschaltung des Getriebes auf, wobei eine versehentliche Abdrosselung oder Verringerung der Fahrgeschwindigkeit des Fahrzeuges vermieden wird.

Die Null-Last- bzw. Niedrig-Last-Aufteilung des Drehmomentenpotentials und der Förderleistung der Hydromotoren zwischen den einzelnen Antriebsachsen ist eine Frage der Auslegung der hydrostatischen Antriebsvorrichtung. Es ist besonders vorteilhaft, bei einem Mähdrescher mit Gelenkverbindung den Hydromotor zum Antrieb der Hinterachse innerhalb der hinteren Getriebeachse zu integrieren und die einzelnen Komponenten so auszulegen, daß mehr als 50 % der gesamten Fahrleistung der vorderen Antriebsachse zur Verfügung steht. Die Füllung des Sammelbehälters 30 vergrößert die Last an der hinteren Antriebsachse. Das System folgt automatisch dem ansteigenden Leistungsbedarf an der hinteren Achse und nimmt somit eine entsprechende Aufteilung der Gesamtleistung auf die hintere Achse vor. Somit wird ein hoher Wirkungsgrad für die gesamte Fahrleistung erzielt.

Zusätzlich zu einer wirkungsvollen Arbeitsweise muß der Mähdrescher auch für eine relativ hohe Transportgeschwindigkeit zur Verfügung stehen, und zwar auf dem Feld wie auf der Straße. Durch die vorteilhafte Verwendung des erfindungsgemäßen Getriebes steht dem Mähdrescher eine entsprechende Antriebsleistung für hohe Fahrtgeschwindigkeiten zur Verfügung, und zwar durch die Kombination einer relativ klein ausgelegten hydrostatischen Antriebsvorrichtung mit einem relativ einfachen Getriebe. Bei vollem Einsatz der Antriebsvorrichtung für alle vier Laufräder steht aufgrund des hydrostatischen Antriebssystems bei allen Geschwindigkeiten die entsprechende Antriebsleistung bzw. Bremsleistung zur Verfügung. Dies führt zu einer erhöhten Sicherheit und vermeidet dadurch die Installierung einer zusätzlichen Bremseinrichtung für den Mähdrescher, der auch mit hoher Geschwindigkeit vorwärtsbewegt werden kann.

Nach Einschaltung einer bestimmten Gangstufe kann die Geschwindigkeit mit einem einzigen Schalthebel gesteuert werden, der zur Steuerung des Fördervolumens der Pumpe 36 dient. Die Drosseln 88 und die entsprechenden Differentialsperren (nicht gezeigt) verhindern das Durchdrehen einzelner Räder und damit den Verlust der Manövrierfähigkeit des Mähdreschers.

Patentansprüche

1. Antriebsvorrichtung für die Antriebsachsen eines Fahrzeuges, insbesondere eines landwirtschaftlich nutzbaren Fahrzeuges, mit einer Verbrennungskraftmaschine (34) zum Antrieb einer Pumpe (36) mit veränderlichem Fördervolumen sowie einem ersten Hydromotor (50) zum Antrieb der ersten Achse sowie einem zweiten Hydromotor (70) zum Antrieb einer zweiten Achse, wobei die beiden Hydromotoren über die Pumpe (36) mit Druckmittel versorgt werden, dadurch gekennzeichnet, daß zumindest dem zweiten Hydromotor (70) eine in Abhängigkeit von einem Ladedruck oberhalb eines einstellbaren Minimaldruckes im Hydrauliksystem der Antriebsvorrichtung stehende Steuereinrichtung (92) wirkungsmäßig zugeordnet ist, die Einfluß auf das Fördervolumen des zweiten Hydromotors (70) hat.

2. Antriebsvorrichtung nach Anspruch 1, dadurch gekennzeichnet, daß zumindest zwischen dem einen Hydromotor (50 oder 70) und der zugehörigen anzutreibenden Welle (56) zum Antrieb der Laufräder (14, 28) ein Wechselgetriebe (54 oder 72) geschaltet ist.

3. Antriebsvorrichtung nach Anspruch 1 oder 2, dadurch gekennzeichnet, daß der erste Hydromotor (50) als Konstantmotor ausgebildet ist.

4. Antriebsvorrichtung nach einem oder mehreren der vorhergehenden Ansprüche, dadurch gekennzeichnet, daß die Veränderung des Fördervolumens des zweiten Hydromotors (70) mittels der automatischen Steuereinrichtung (92) proportional dem Wechsel des Ladedruckes bzw. des Druckes im Hydrauliksystem entspricht.

5. Antriebsvorrichtung nach einem oder mehreren der vorhergehenden Ansprüche, dadurch gekennzeichnet, daß in die Antriebsverbindung zwischen einem jeden Hydromotor (50, 70) und der zugehörigen Welle (56) ein Wechselgetriebe (54, 72) mit mindestens zwei Gängen integriert ist.

6. Antriebsvorrichtung nach einem oder mehreren der vorhergehenden Ansprüche, dadurch gekennzeichnet, daß zwischen der Pumpe (36) und den nachgeschalteten Hydromotoren (50, 70) Drosseln (88) in den die Hydromotoren miteinander verbindenden Hydraulikleitungen (80, 82, 84, 86) geschaltet sind.

7. Antriebsvorrichtung nach einem oder mehreren der vorhergehenden Ansprüche, dadurch gekennzeichnet, daß die Hydromotoren (36, 70, 50) in einem geschlossenen Hydraulikkreislauf parallel geschaltet sind.

8. Antriebsvorrichtung nach einem oder mehreren der vorhergehenden Ansprüche, dadurch gekennzeichnet, daß die Steuereinrichtung (92) aus mindestens einem in einem Zylinder angeordneten, gegen die Wirkung einer Druckfeder (96) verstellbaren Kolben (94) gebildet ist, der in Abhängigkeit von dem Druck des Hydrauliksystems mindestens das Fördervolumen des Hydromotors (70) zum Antrieb der hinteren Laufräder (28) eines Mähdreschers steuert, der als Gelenkmähdrescher mit einer hinteren einen Sammelbehälter (30) aufweisenden Rahmeneinheit ausgerüstet ist.

0130420

1/3

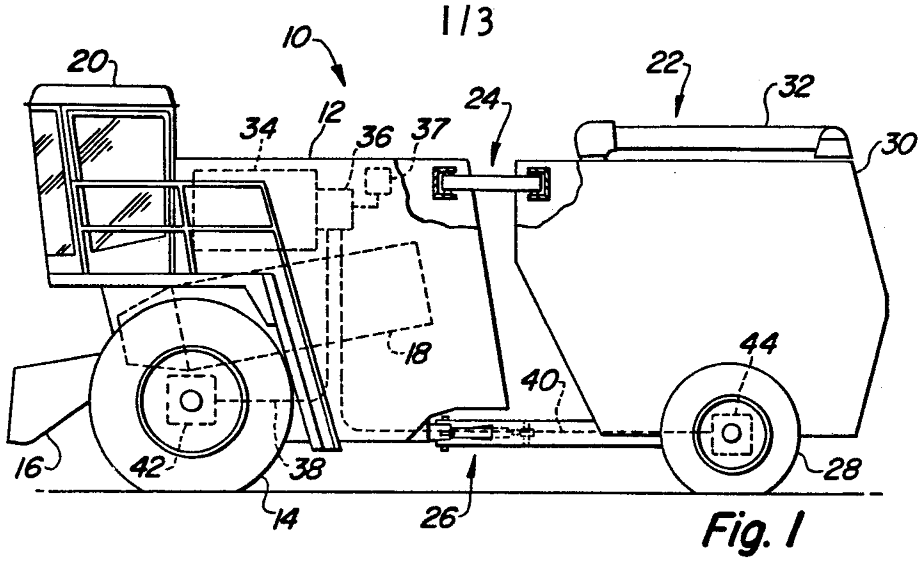


Fig. 1

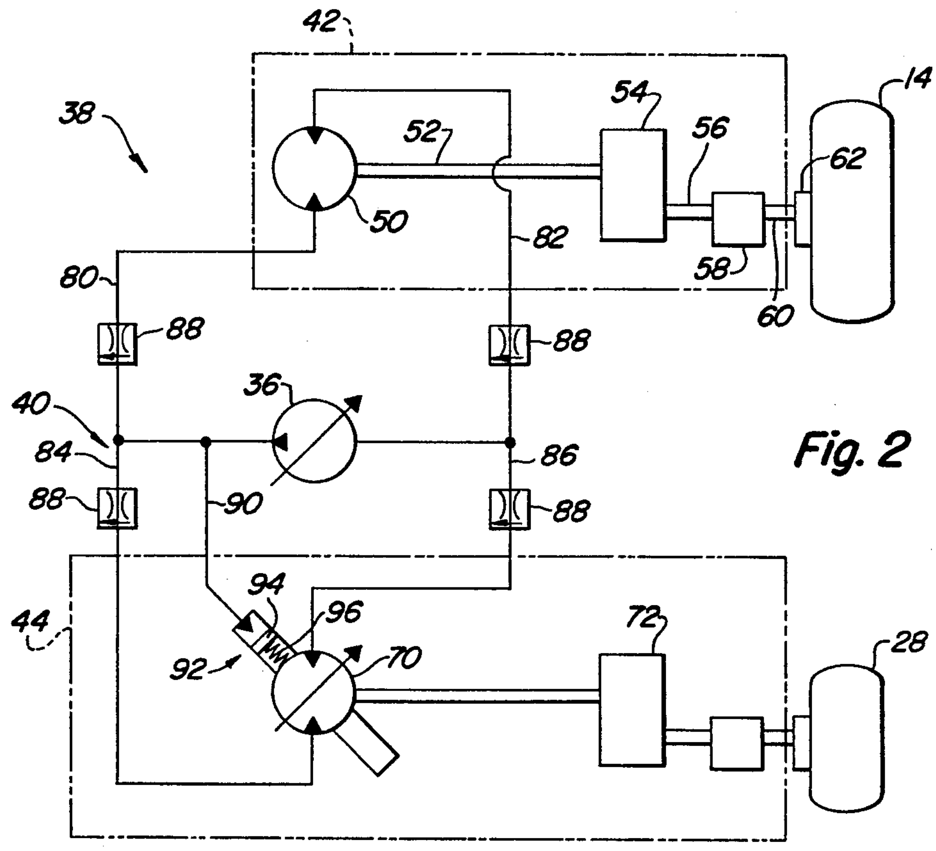


Fig. 2

*Fig. 3*

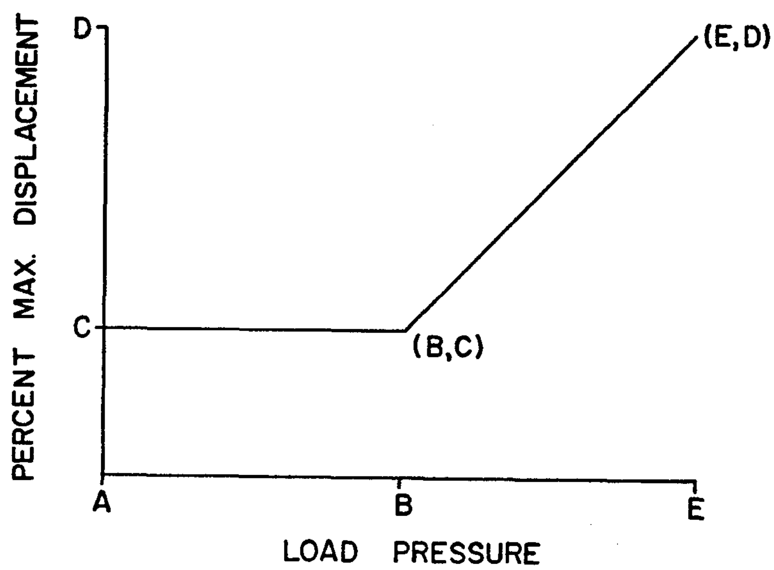


| GEAR | RIM PULL RATIO-MAX. | FRONT AXLE RATIO | REAR AXLE RATIO |
|---|---|---|---|
| 1 | .668 | 6.02 | 3.09 |
| 2 | .485 | 3.09 | 3.09 |
| 3 | .288 | 3.09 | 1.0 |
| 4 | .157 | 1.0 | 1.0 |

*Fig. 5*

Fig. 6

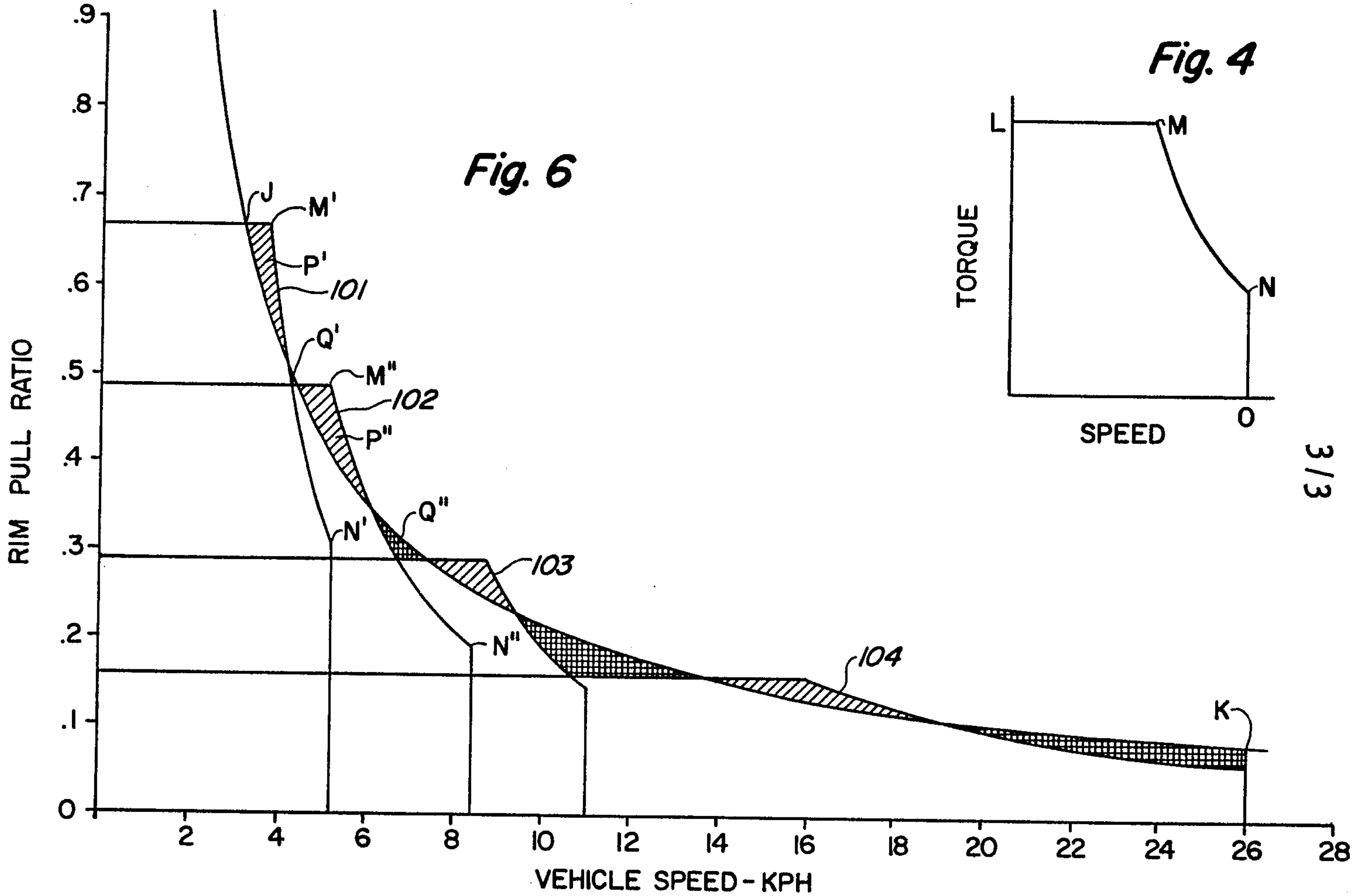

RIM PULL RATIO
.9
.8
.7
.6
.5
.4
.3
.2
.1
0
2
4
6
8
10
12
14
16
18
20
22
24
26
28
VEHICLE SPEED - KPH
J
M'
P'
101
Q'
M"
102
P"
N'
Q"
103
N"
104
K


Fig. 4


TORQUE
L
M
N
0
SPEED

Europäisches Patentamt

# EUROPÄISCHER RECHERCHENBERICHT

0 130 420 Nummer der Anmeldung

EP 84 10 6560

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-1 931 790 (KURT) * Seiten 2-9; Figuren * | 1,4,7, 8 | F 16 H 39/50 |
| A | US-A-3 463 034 (MILLER) * Spalten 3-5; Figur 1 * | 1,2,5 | |
| D,A | US-A-3 736 732 (JENNINGS) * Spalten 2-4; Figuren * | 1,3,6, 7 | |
| A | DE-A-1 022 101 (AUSTIN) | | |

RECHERCHIERTE SACHGEBIETE (Int. Cl. 3)

F 16 H 39/00
F 16 H 47/00

Der vorliegende Recherchenbericht wurde für alle Patentansprüche erstellt.

| Recherchenort | Abschlußdatum der Recherche | Prüfer |
|---|---|---|
| DEN HAAG | 12-09-1984 | FLORES E. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82